# EUROPEAN PATENT APPLICATION

(11) **EP 2 246 864 A1**
(43) Date of publication of application: **03.11.2010**
(21) Application number: 09712198.2
(22) Date of filing: 04.02.2009
(51) Int. Cl.: H01F 38/14, H01F 27/24, H02J 17/00

(54) **POWER RECEIVING COIL BLOCK**

(30) Priority: 20.02.2008 JP 2008039209
(71) Applicant: Panasonic Electric Works Co., Ltd, Kadoma-shi Osaka 571-8686 (JP)
(72) Inventor: KITAMURA, Kota, Kadoma-shi Osaka 571-8686 (JP); SUZUKI, Masayuki, Kadoma-shi Osaka 571-8686 (JP); YABUUCHI, Hidekazu, Kadoma-shi Osaka 571-8686 (JP)
(74) Representative: Appelt, Christian W.
(86) International application number: PCT/JP2009/051875
(87) International publication number: WO 2009/104474

(57) **Abstract**

A power reception coil unit includes a power reception coil (1) configured to be magnetically coupled to a power supply coil during a power transmission and a magnetic plate (2) made of a magnetic material having electrical conductivity. The power reception coil (1) is a planar coil. The magnetic plate (2) has its surface opposed to the power reception coil (1) and is parallel to the power reception coil (1). The magnetic plate (2) is provided with a plurality of slits (4) in the surface.

## Description

### Technical Field

The present invention is directed to power reception coil units, more particular, to a power reception coil unit for a contactless power transmission apparatus configured to transmit an electric power in a noncontact manner by use of electromagnetic induction,

### Background Art

In the past, as disclosed in Japanese laid-open patent publication No. 2006-311712, there is known a contactless power transmission apparatus configured to transmit an electric power in a noncontact manner by use of electromagnetic induction. This kind of the contactless power transmission apparatus includes a power supply coil unit having a power supply coil and a power reception coil unit having a power reception coil configured to be magnetically coupled to the power supply coil.

The aforementioned Japanese laid-open patent publication discloses a planar coil is adopted as the power reception coil. In comparison with a coil wound around a core or bobbin, the planar coil has a merit in that it can be made thin, but has a demerit of poor magnetic characteristics.

Therefore, in order to supplement this demerit, it has been proposed to dispose a magnetic plate which is made of a magnetic material having electrical conductivity in the rear surface side of the power reception (opposite surface side of the power reception coil from the power supply coil side). To dispose this magnetic plate can improve power transmission efficiency. However, because of the magnetic plate having electrical conductivity, a magnetic field generated by the power supply coil is likely to cause eddy current which flows through the magnetic plate. The eddy current causes a temperature rise of the magnetic plate. Further, an eddy-current loss causes a decrease in the power transmission efficiency.

### Disclosure of Invention

In view of the above insufficiency, the present invention has been aimed to propose a power reception coil unit capable of suppressing a temperature rise of the magnetic plate as well as improving power transmission efficiency.

The power reception coil unit in accordance with the present invention is used for a contactless power transmission apparatus configured to transmit an electric power in a noncontact manner by use of electromagnetic induction. This power reception coil unit includes a power reception coil configured to be magnetically coupled to a power supply coil during a power transmission and a magnetic plate made of a magnetic material having electrical conductivity. The power reception coil is a planar coil. The magnetic plate has its surface opposed to the power reception coil and is parallel to the power reception coil. The magnetic plate is provided with a gap in at least the surface.

According to the invention, the gap formed in the magnetic plate delimits the eddy current flowing through the magnetic plate. Thus, it is possible to suppress the temperature rise caused by the eddy current flowing through the magnetic plate, thereby reducing a heat loss. Also, the reduction of the eddy-current can improve power transmission efficiency.

In a preferred embodiment, the gap is a slit.

According to the preferred embodiment, the gap breaks the eddy current because the slit penetrates through the magnetic plate. Therefore, the magnetic plate can more reduce the eddy current than in a case where the gap is provided in the form of a groove.

In a preferred embodiment, the gap is a groove.

According to the preferred embodiment, the magnetic plate can be easier to handle than in a case where the gap is provided in the form of a slit.

In a preferred embodiment, the gap extends along a magnetic flux which passes through the magnetic plate during the power transmission.

According to the preferred embodiment, it is possible to efficiently suppress the eddy current, yet restraining the gap from blocking the flow of the magnetic flux.

In a preferred embodiment, the magnetic plate is provided with a plurality of the gaps which are arranged such that density of the gaps of one portion of the magnetic plate having relatively high density of a magnetic flux passing through the magnetic plate during the power transmission is higher than density of the gaps of another portion of the magnetic plate having relatively low density of the magnetic flux passing through the magnetic plate during the power transmission.

According to the preferred embodiment, it is possible to efficiently suppress the eddy current.

### Brief Description of Drawings

FIG. 1 is an exploded perspective view illustrating a power reception coil unit of a first embodiment,
FIG. 2 is a plane view illustrating a magnetic plate of the above power reception coil unit,
FIG. 3A is an explanatory view illustrating eddy current which passes through the magnetic plate without slits,
FIG. 3B is an explanatory view illustrating eddy current which passes through the magnetic plate with slits,
FIG. 4A is an explanatory view illustrating a method of forming slits for the above magnetic plate,
FIG. 4B is an explanatory view illustrating a method of forming slits for the above magnetic plate,
FIG. 5A is a perspective view, taken from front side, illustrating the magnetic plate in accordance with a second embodiment,
FIG. 5B is a perspective view, taken from rear side, illustrating the above magnetic plate,
FIG. 6A is a perspective view illustrating a modification of the above magnetic plate,
FIG. 6B is a side view illustrating the modification of the above magnetic plate,
FIG. 7 is a cross-sectional view illustrating the partially omitted power reception coil unit of a third embodiment,
FIG. 8A is a plane view illustrating the magnetic plate in accordance with a fourth embodiment,
FIG. 8B is a plane view illustrating a modification of the above magnetic plate,
FIG. 8C is a plane view illustrating a modification of the above magnetic plate,
FIG. 8D is a plane view illustrating a modification of the above magnetic plate,
FIG. 9 is an explanatory view illustrating a directional relation between magnetic fluxes and eddy current,
FIG. 10A is a plane view illustrating the magnetic plate in accordance with a fifth embodiment,
FIG. 10B is a plane view illustrating a modification of the above magnetic plate,
FIG. 10C is a plane view illustrating a modification of the above magnetic plate,
FIG. 11A is an exploded perspective view illustrating the power reception coil unit of a sixth embodiment,
FIG. 11B is an exploded perspective view illustrating a modification of the above power reception coil unit,
FIG. 11C is an exploded perspective view illustrating a modification of the above power reception coil unit, and
FIG. 12 is an exploded perspective view illustrating a modification of the above power reception coil unit.

### Best Mode for Carrying Out the Invention

### (first embodiment)

A power reception coil unit of the present embodiment constitutes a contactless power transmission apparatus configured to transmit an electric power in a noncontact manner by use of electromagnetic induction together with a power supply coil unit (not shown) having a power supply coil. In the contactless power transmission apparatus, generally, the power reception coil is separated from the power supply coil unit. The power reception coil unit is positioned at a prescribed position for the power supply coil unit in order to transmit an electrical power. The prescribed position is defined to be a position where a transformer has its power supply coil and power reception coil magnetically coupled to each other to render the power supply coil as a primary coil and the power reception coil as a secondary coil. The contactless power transmission apparatus is configured to utilize the transformer to transmit an electrical power to the power reception coil unit from the power supply coil unit in the noncontact manner.

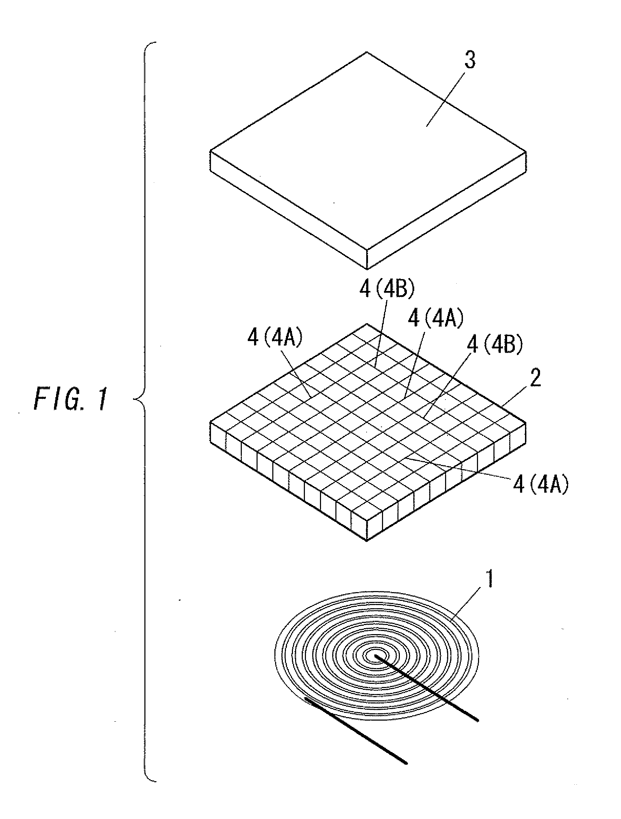

As shown in FIG. **1****,** the power reception coil unit of the present embodiment includes the power reception coil **1** configured to be magnetically coupled to the power supply coil during a power transmission, and the power reception coil unit further includes a magnetic plate **2** and a shield plate **3.**

The power reception coil **1** is a planar coil. The planar coil of the present embodiment is formed by winding a conductive wire in a spiral manner within a plane. This planar coil is of well known configuration and no explanation is deemed necessary. The power reception coil **1** is disposed in a surface (front surface) side (first thickness surface side, lower surface side in FIG 1) of the magnetic plate **2.** Therefore, when making the power transmission by use of the power reception coil unit of the present embodiment, the power supply coil unit is disposed in an opposite side (lower surface side, in FIG. 1) of the power reception coil **1** from the magnetic plate **2.**

The magnetic plate **2** is used for improvement of efficiency of the power transmission from the power supply coil to the power reception coil 1 by use of the electromagnetic induction. For example, the magnetic plate **2** is made of a magnetic material and is shaped into a rectangular (square) flat plate shape. For example, an amorphous magnetic material is adopted as the magnetic material. The magnetic plate **2** is positioned to be parallel to the power reception coil **1** and to have its surface (front surface) opposed to the power reception coil **1.** In the present embodiment, the power reception coil **1** is secured to the surface of the magnetic plate **2** with an adhesive (e.g. a pressure-sensitive adhesive sheet). A dielectric member may be interposed between the power reception coil **1** and the magnetic plate **2,** as necessary.

The magnetic plate **2** of the present embodiment is provided with a plurality of linear slits **4** in the surface (front surface). In the present embodiment, each of the slits **4** defines a gap formed in the surface of the magnetic plate **2.**

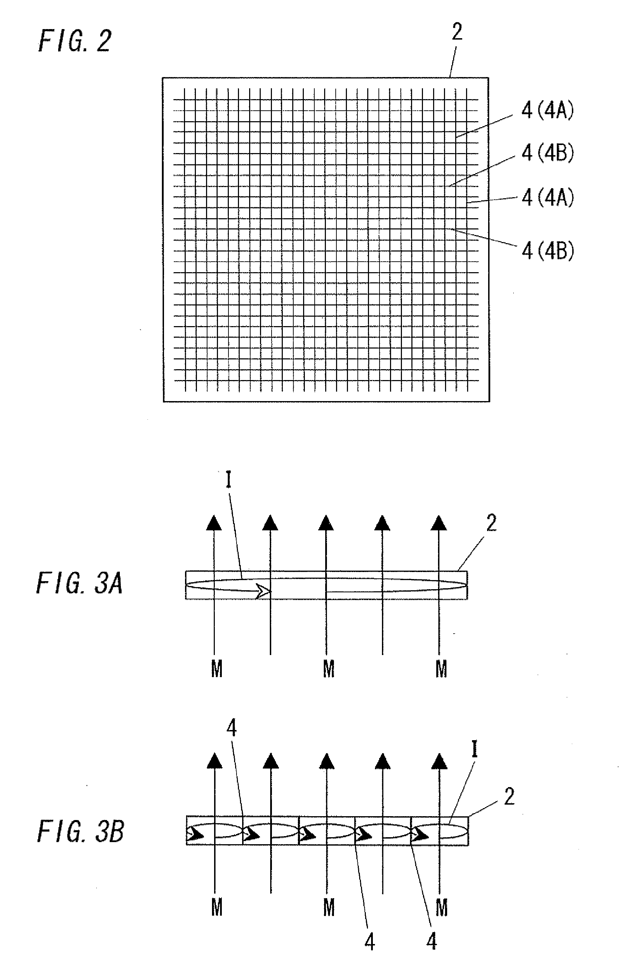

The plurality of slits **4** is formed in the magnetic plate **2** in a reticular pattern. In more detail, the magnetic plate **2** is provided with a plurality of slits **4** (designated by the reference number of **4A,** as necessary) which are respectively parallel to one side of the surface of the magnetic plate **2.** The magnetic plate **2** is further provided with a plurality of slits **4** (designated by the reference number of **4B,** as necessary) which are respectively perpendicular to each of the slits **4A.** Both of the slits **4A** and **4B** are spaced respectively at regular intervals, for example, in a range of 0.1 to 5.0 mm. In a modification shown in FIG. 2, the slits **4** do not extend to a periphery of the magnetic plate **2.** That is, in the modification shown in FIG. 2, the periphery of the magnetic plate **2** functions as a frame. According to the modification shown in FIG. 2, the magnetic plate **2** can be easier to handle. Of course, as shown in FIG.1, the slits **4** may extend to the periphery of the magnetic plate **2.**

The shield plate **3** is made of a magnetic material and is shaped into a rectangular (square) flat plate shape, for example. The shield plate **3** is positioned in a rear surface side (second thickness surface side, upper surface side in FIG. 1) of the magnetic plate **2.** In the present embodiment, the shield plate **3** is secured to the rear surface of the magnetic plate **2** with an adhesive. Thus, the power reception coil unit of the present embodiment is constructed by superimposing the power reception coil **1**, the magnetic plate **2,** and the shield plate **3** in this order. In view of the power reception coil unit, the shield plate **3** is used as a magnetic shield which prevents magnetic flux leakage. The shield plate **3** is preferred to have a function as a heatsink. The magnetic material for the shield plate **3** may be the same as the magnetic plate **2** and may be different from the magnetic plate **2.**

As described in the above, the power reception coil unit of the present embodiment includes the power reception coil **1** configured to be magnetically coupled to the power supply coil during the power transmission and the magnetic plate **2** made of a magnetic material having electrical conductivity. The power reception coil **1** is the planar coil. The magnetic plate **2** has its surface opposed to the power reception coil **1** and is parallel to the power reception coil **1.** In addition, the magnetic plate **2** is provided with slits **4.**

The power reception coil unit of the present embodiment is used for the contactless power transmission apparatus configured to transmit an electric power in the noncontact manner by use of the electromagnetic induction. The power reception coil unit is positioned at the aforementioned prescribed position for the power supply coil unit in order to transmit an electrical power. In the case of the power reception coil of the power reception coil unit being a planar coil, the prescribed position is defined as a position where the power reception coil has its center aligned with a center of the power supply coil (however, the center of the power reception coil is not necessarily to be aligned exactly with the center of the power supply coil, and may be aligned roughly with the center of the power supply coil).

In this condition, the electromagnetic induction generates a voltage across the power reception coil when an AC voltage is applied across the power supply coil. At this time, as shown in FIGS. **3A** and 3B, magnetic fluxes **M** generated by the power reception coil pass through the magnetic plate **2.** As a result, eddy current **I** flows through the magnetic plate **2.**

In case of the magnetic plate **2** with no slits **4,** as shown in FIG. **3A****,** a relatively high eddy current flows through the entire magnetic plate **2.** By contrast, in the present embodiment, the magnetic plate **2** has slits **4** formed therein. The eddy current **4** fails to flow through the magnetic plate **2** across the slits **4** because the respective slits **4** penetrate through the magnetic plate **2** along a thickness direction thereof. Therefore, in the case of the magnetic plate **2** in accordance with the present embodiment, the eddy current I, as shown in FIG. 3B, flows through each of portions of the magnetic plate **2** separated from each other by the slits **4.** Accordingly, the high eddy current **I** as shown in FIG. 3A is not allowed to flow through the magnetic plate **2** in accordance with the present embodiment.

As described in the above, the slits **4** limit eddy current generated by the magnetic fluxes penetrating through the magnetic plate **2** and flowing through the magnetic plate **2.** Therefore, the magnetic plate **2** having no slits **4** allows the large eddy current **I** to flow therethrough, as shown in FIG. **3A****.** By contrast, in the case of the magnetic plate **2** being finely divided by the slits **4,** as shown in FIG. 3B, the eddy current **I** only flows through each of finely divided portions of the magnetic plate **2.** Therefore, no large eddy current **I** flows through the magnetic plate **2.**

Therefore, according to the power reception coil unit of the present embodiment, the slit **4** formed in the magnetic plate delimits the eddy current flowing through the magnetic plate **2.** Thus, it is possible to suppress the temperature rise caused by the eddy current flowing through the magnetic plate, thereby reducing a heat loss. Also, the reduction of the eddy-current can improve power transmission efficiency.

Particularly, in the present embodiment, the slit **4** is formed in the surface of the magnetic plate **2** as the gap. The slit **4** breaks the eddy current because the slit **4** penetrates through the magnetic plate **2.** Therefore, relative to the gap being a groove, it is possible to reduce the eddy current. Thus, the power reception coil unit of the present embodiment is capable of suppressing a decrease in the power transmission caused by the heat loss due to an occurrence of the eddy current. Therefore, it is possible to efficiently improve the power transmission with the use of the magnetic plate **2.**

By the way, the respective slits **4** penetrate through the magnetic plate **2** along the thickness direction thereof. When the slits **4** are formed in the magnetic plate **2** in the reticular pattern, the magnetic plate **2** is divided into plural pieces. In other words, the magnetic plate 2 of the present embodiment is composed of a plurality of magnetic members which are arranged in a planar array.

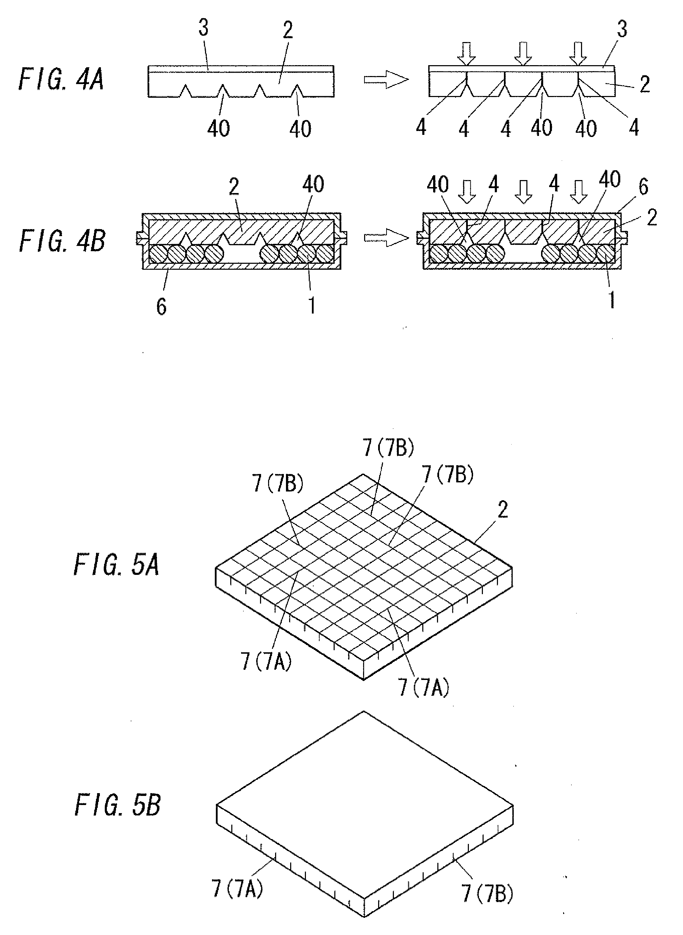

When the magnetic plate **2** being divided, the magnetic plate **2** becomes difficult to handle. In the case that the slits **4** are formed in the magnetic plate **2** in a reticular pattern, as shown in FIGS. 4A and 4B, the slits **4** can be formed after the magnetic plate **2** is secured to the shield plate **3.** In the instance shown in FIG. 4A, cuts **40** having a V-shape in its cross section are respectively formed in regions of the surface of the magnetic plate **2** for forming the slit **4.** In the instance shown in FIG. 4A, a pressure by a roll is applied to the magnetic plate **2** after the magnetic plate **2** provided with the cuts **40** is secured to the shield **3.** As a result, the magnetic plate **2** is split along the respective cuts **40,** thereby forming the slits **4.** It is noted that an adhesive sheet can be used instead of the shield plate **3.** In the instance shown in FIG. **4B****,** the magnetic plate **2** is split along the respective cuts **40** after the magnetic plate **2** and the power reception coil **1** are wrapped in a laminated film **6.**

### (second embodiment)

As shown in FIGS. 5A and 5B, the power reception coil unit of the present embodiment is different in a configuration of the magnetic plate **2** from that of the first embodiment. With regard to other components, the power reception coil unit of the present embodiment is the same as that of the first embodiment, and no explanation is deemed necessary.

The magnetic plate **2** in accordance with the present embodiment is made of a magnetic material having electrical conductivity and is shaped into a rectangular (square, in the illustrative instance) flat plate shape in a similar fashion as the first embodiment. However, the magnetic plate **2** is provided in the surface (lower surface, in FIG. 5A) with a plurality of linear grooves **7** instead of the slits **4.** In the present embodiment, each of the grooves **7** defines the gap formed in the surface of the magnetic plate **2.**

The plurality of grooves **7** is formed in the magnetic plate **2** in a reticular pattern. In more detail, the magnetic plate **2** is provided with a plurality of grooves **7** (designated by the reference number of **7A**, as necessary) which are respectively parallel to one side of the surface of the magnetic plate **2.** The magnetic plate **2** is further provided with a plurality of grooves **7** (designated by the reference number of **7B**, as necessary) which are respectively perpendicular to each of the grooves **7A**. Both of the grooves **7A** and **7B** are spaced respectively at regular intervals, for example, in a range of 0.1 to 5.0 mm. Each of the grooves **7** is preferred to have its depth in a range of 25% to 95% of a thickness of the magnetic plate **2.**

According to the power reception coil unit of the present embodiment, the groove **7** formed in the magnetic plate **2** delimits the eddy current flowing through the magnetic plate **2.** Thus, it is possible to suppress the temperature rise caused by the eddy current flowing through the magnetic plate **2,** thereby reducing a heat loss. Also, the reduction of the eddy-current can improve power transmission efficiency.

Particularly, in the present embodiment, the groove **7** is formed in the surface of the magnetic plate **2** as the gap. Therefore, differently from the first embodiment where the gap is defined by the slit **4,** the magnetic plate **2** is not divided into plural pieces. Thus, the magnetic plate **2** can maintain its shape without any additional support by other members. Accordingly, the magnetic plate **2** can be easier to handle. Further, the groove **7** does not penetrate through the magnetic plate **2** differently from the slit **4.** A rear portion of the magnetic plate **2** where no grooves **7** are formed functions as the shield plate **3** which prevents magnetic flux leakage. In this instance, the shield plate **3** need not be provided.

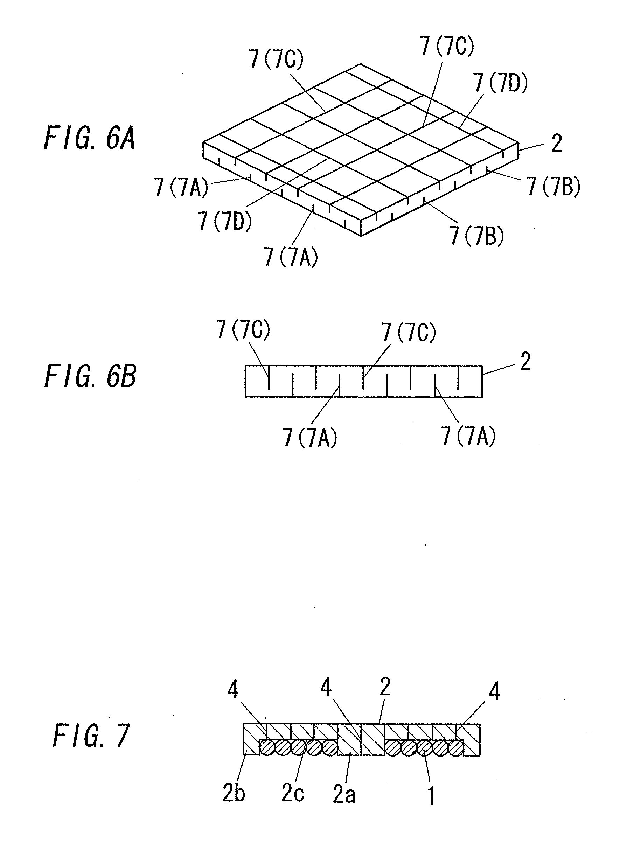

Moreover, in the instance shown in FIGS. 5A and 5B, the grooves **7** are formed in only the surface of the magnetic plate **2.** However, as shown in FIGS. 6A and 6B, the groove **7** can be formed in the rear surface of the magnetic plate **2** in addition to the surface of the magnetic plate **2.** That is, the magnetic plate **2** may be provided with the gaps in both its surface and rear surface.

A plurality of grooves **7** is formed in a reticular pattern in the rear surface of the magnetic plate **2** shown in FIG. **6****.** In more detail, the magnetic plate **2** is provided in its rear surface with a plurality of grooves **7** (designated by the reference number of **7C,** as necessary) which are respectively parallel to the respective grooves **7A** formed in the surface of the magnetic plate **2.** The magnetic plate **2** is provided with a plurality of grooves **7** (designated by the reference number of **7D,** as necessary) which are respectively perpendicular to each of the grooves **7C.**

Each of the grooves **7C** is formed not to overlap the respective groove **7A** in the thickness direction (upward/downward direction, in FIG 6B) of the magnetic plate **2.** In a similar fashion, each of the grooves **7D** is formed not to overlap the respective groove **7B** in the thickness direction of the magnetic plate **2.** As apparent from the above, in the instance shown in FIG. **6****,** the magnetic plate **2** is provided in its opposite surfaces with the grooves **7**, and the grooves **7** in one surface are staggered with respect to those in the other surface. In the illustrated instance, both of the grooves **7C** and **7D** are spaced respectively at regular intervals, for example, in a range of 0.1 to 5.0 mm. Each of the grooves **7C** and **7D** is preferred to have its depth in a range of 25% to 95% of a thickness of the magnetic plate **2.**

### (third embodiment)

As shown in FIG. 7, the power reception coil unit of the present embodiment is different in the configuration of the magnetic plate **2** from that of the first embodiment. With regard to other components, the power reception coil unit of the present embodiment is the same as that of the first embodiment, and no explanation is deemed necessary.

The magnetic plate **2** in accordance with the present embodiment is provided on a center of the surface with a circular cylindrical protrusion **2a** extending through a center of the power reception coil **1.** Further, the magnetic plate **2** is provided on the periphery of the surface with a peripheral wall **2b** which surrounds the power reception coil **1**. The peripheral wall **2b** has its inner periphery shaped into a circular shape. The peripheral wall **2b** has its center aligned with the center of the protrusion **2a.**

In the magnetic plate **2** of the present embodiment, the power reception coil **1** is placed in an annular space **2c** between the protrusion **2a** and the peripheral wall **2b**. That is, the magnetic plate **2** is located in not only a first surface side of the power reception coil **1** but also the center side and outer periphery side of the power reception coil **1**. In addition, the slits **4A** and **4B** are formed in the magnetic plate **2** in the reticular pattern, respectively.

In the power reception coil unit of the present embodiment, the magnetic plate **2** effectively supplements the magnetic fluxes because the magnetic fluxes penetrate through the protrusion and the peripheral wall during the power transmission. Therefore, the power transmission efficiency can be more improved. The shapes of the protrusion **2a** and the peripheral wall **2b** are not limited to the above instances, respectively.

### (fourth embodiment)

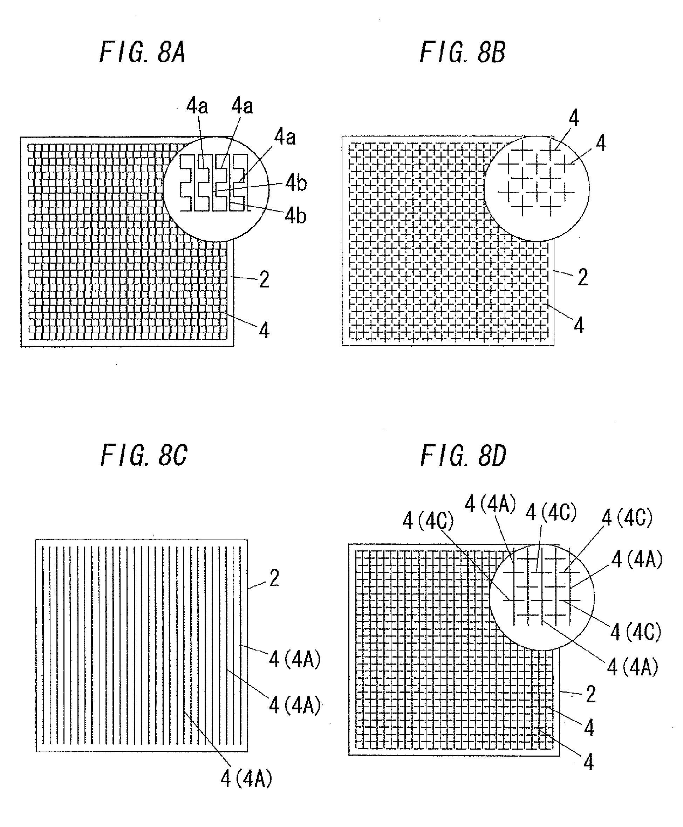

As shown in FIG. 8A, the power reception coil unit of the present embodiment is different in the configuration of the magnetic plate **2** from that of the first embodiment. With regard to other components, the power reception coil unit of the present embodiment is the same as that of the first embodiment, and no explanation is deemed necessary. Further, a circle in FIG. **8A** illustrates a schematic explanatory view of the magnetic plate **2.**

The magnetic plate **2** on the present embodiment is provided with the slit **4** in the surface, in a similar manner as the first embodiment **1**. The slit **4** of the present embodiment is formed in the magnetic plate **2** in a traversable fashion. Particularly, as shown in the circle of FIG. 8A, the slit **4** is shaped to have parallel rectangular wave-shaped portions **4a** and parallel linear portions **4b** which are arranged alternately with each other. With this arrangement, the linear portion **4b** connects a first end of the rectangular wave-shaped portion **4a** to a second end of the next rectangular wave-shaped portion **4b.**

According to the power reception coil unit of the present embodiment, the magnetic plate **2** is not divided into plural pieces by the slits **4** yet the magnetic plate **2** is provided with the slits **4** which penetrate through the magnetic plate **2.** Therefore, the magnetic plate **2** can be easier to handle.

The magnetic plate **2** shown in respective FIGS. 8B to 8D can be used in the power reception coil unit of the present embodiment. It is noted that circles in FIG. 8B and 8D illustrate a schematic explanatory view of the magnetic plate **2.**

The magnetic plate **2** shown in FIG. 8B is provided with a plurality of cross-shaped slits **4.** The magnetic plate **2** shown in FIG. 8C is provided with only the plurality of the slits **4A** described in the first embodiment. FIG. 8D shows the magnetic plate **2** with the plurality of the slits **4A** and also with a plurality of slits **4** (designated by the reference number of **4C** in order to be distinguished from the slit **4A,** in FIG. 8D). Each of the slits **4C** intersects with any one of the slits **4A.** In the illustrated instance, each of the slits **4C** is perpendicular to the slit **4A.**

According to the instances of respective FIGS. 8B to 8D, the magnetic plate **2** is not divided into plural pieces by the slits **4.** Therefore, the magnetic plate **2** can be easier to handle.

### (fifth embodiment)

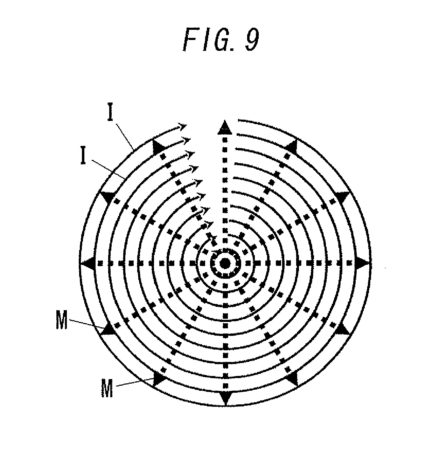

In the case of the power supply coil being a planar coil, as shown in FIG. 9, the magnetic fluxes **M** which pass through the magnetic plate **2** during the power transmission radiate from a position corresponding to the center of the power reception coil **1.** It is noted that the eddy current **I** flows along a direction perpendicular to each of the magnetic fluxes **M.**

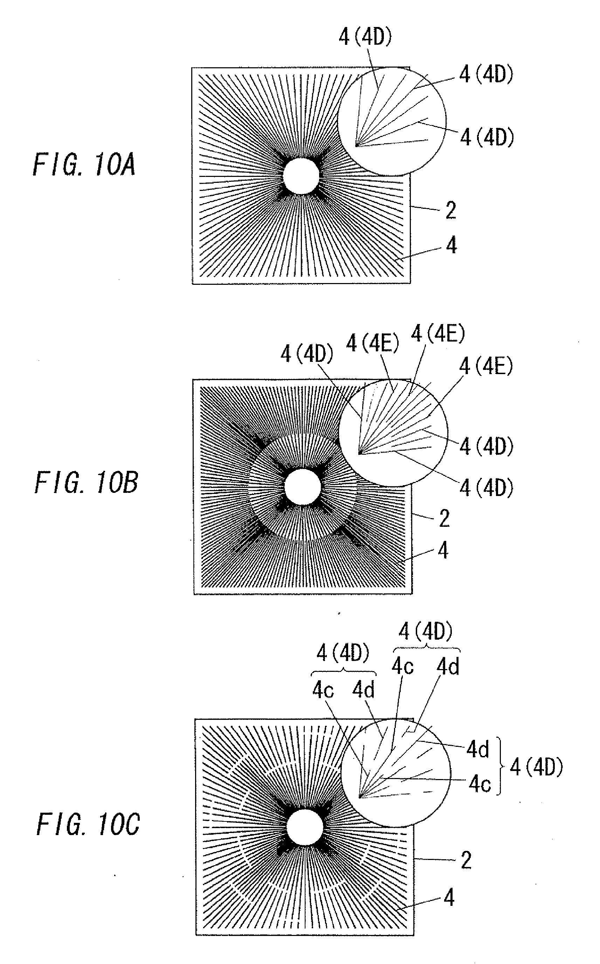

Therefore, a plurality of slits **4** (designated by the reference number of **4D,** as necessary) is formed to extend in a radial fashion in the magnetic plate **2** of the present embodiment. It is noted that the power reception coil unit of the present embodiment is different in the configuration of the magnetic plate **2** from that of the first embodiment. With regard to other components, the power reception coil unit of the present embodiment is the same as that of the first embodiment, and no explanation is deemed necessary. Further, a circle in FIG. 10A illustrates a schematic explanatory view of the magnetic plate **2.**

The plurality of slits **4D** extends in the radial fashion from the position of the magnetic **plate 2** (the center of the magnetic plate **2,** in the illustrated instance) corresponding to the center of the power reception coil **1.** That is, each of the slits **4D** is formed along a radial direction of the power reception coil **1.** As described in the above, the magnetic fluxes **M** radiate from the position corresponding to the center of the power reception coil **1**. Thus, the slit **4D** is formed to extend along (be parallel to) a magnetic flux **M** which passes through the magnetic plate **2** during the power transmission. In the instance shown in FIG. 10, in order to prevent the magnetic plate **2** from being divided into plural pieces, the slits **4D** do not extend to the center and periphery of the magnetic plate **2**.

As described in the above, the slit **4D** which is parallel to the magnetic flux **M** does not block the flow of the magnetic flux **M** by comparison with the respective slits **4A** and **4B** described in the first embodiment. Further, the eddy current **I** can be effectively reduced because the slit **4D** is perpendicular to a direction along which the eddy current **I** flows.

Therefore, according to the power reception coil unit of the present embodiment, it is possible to efficiently suppress the eddy current, yet restraining the slits **4D** from blocking the flow of the magnetic flux **M.**

By the way, in the instance shown in FIG. 10A, a distance between the slits **4D** increases as the slits **4D** are away from the center of the magnetic plate **2.** Density of the magnetic flux **M** is made higher towards a position close to the center of the magnetic plate **2** than at a position away from the center of the plate **2.** Therefore, the magnetic plate **2** is provided with the plurality of the slits **4D** which are arranged such that density of the slits **4D** of one portion of the magnetic plate **2** having relatively high density of the magnetic flux **M** passing through the magnetic plate **2** during the power transmission is higher than density of the slits **4D** of another portion of the magnetic plate **2** having relatively low density of the magnetic flux **M** passing through the magnetic **plate 2** during the power transmission. That is, the density of the slits **4D** increases as the density of the magnetic flux **M** increases. In this configuration, it is possible to effectively suppress the eddy current **I.**

It is noted that the density of the slits **4D** need not be corresponding to the density of the magnetic flux **M.** For example, as shown in FIG. 10B, in the case of the magnetic plate **2** being provided with the slits **4D,** a plurality of slits **4** (designated by the reference number of **4E,** in order to distinguish from the slits **4D** in the illustrated instance) may be formed to extend in a radial fashion in the periphery of the magnetic plate **2.** Further, a circle in FIG. 10B illustrates a schematic explanatory view of the magnetic plate **2.**

FIG. 10C illustrates another instance of the magnetic plate **2** of the present embodiment. The slit **4D** of FIG. 10C is composed of a portion **4c** located in the center side and a portion **4d** located in the periphery side. In other words, in the instance shown in FIG. 10C, a plurality of the slits **4** are arranged along the same radial direction between the center and the periphery of the magnetic plate **2.** Especially, the magnetic plate **2** shown in FIG. 10C is provided with different types of the slit **4D** which have the portion **4c** of different lengths. With this arrangement, the magnetic plate **2** is interrupted in a circumferential direction of the power reception coil **1**. This can effectively prevent the eddy current **I** from flowing through the magnetic plate **2.** According to the instance shown in FIG. 10C, it is possible to keep rigidity of the magnetic plate **2.**

The magnetic plate **2** shown in FIG. 10C has great effect of decreasing a loss caused by the eddy current and is highly effective in view of the improvement of the power transmission efficiency. Further, a circle in FIG. 10C illustrates a schematic explanatory view of the magnetic plate **2.**

### (sixth embodiment)

The power reception coil unit of the present embodiment is different in the configuration of the magnetic plate **2** from that of the first embodiment. With regard to other components, the power reception coil unit of the present embodiment is the same as that of the first embodiment, and no explanation is deemed necessary.

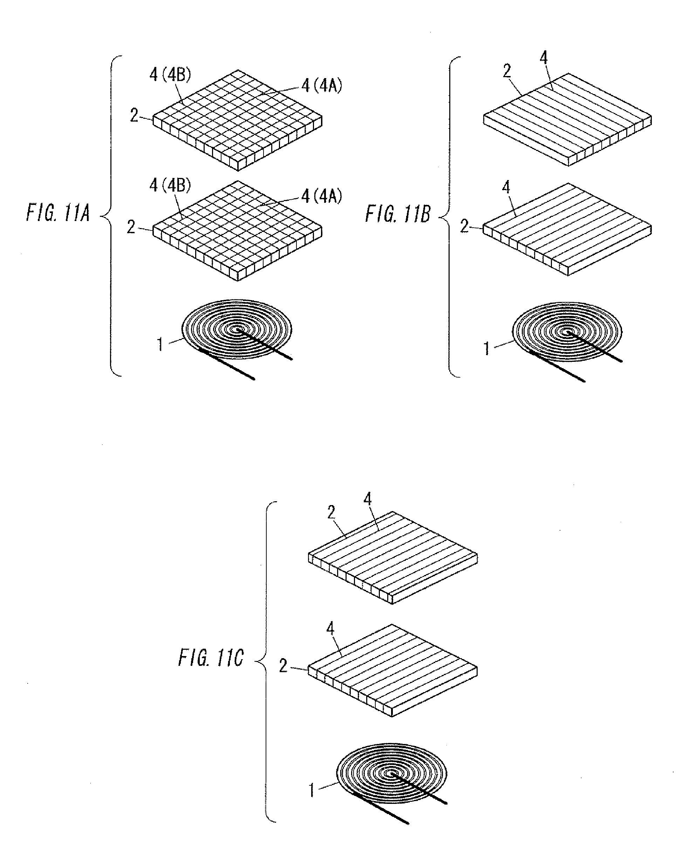

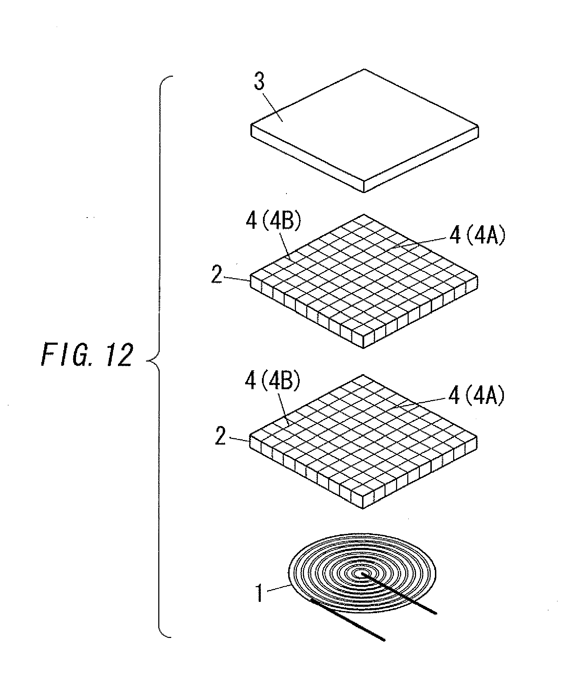

As shown in FIG. 11A, the power reception coil unit of the present embodiment includes the two magnetic plates **2.** In the instance shown in FIG. 11A, the magnetic plates **2** described in the first embodiment are stacked in two layers. In this instance, magnetic fluxes are likely to leak to an opposite side of the magnetic plate **2** from the power reception coil **1** by passing through the slits **4** of each of the magnetic plates **2.** Therefore, in this instance, as shown in FIG. 12, it is preferred to dispose the shield plate **3** in the opposite side of the magnetic plate **2** from the power reception coil **1.**

In view of this magnetic flux leakage, as shown in FIGS. 11B and 11C, the slits **4** of the stacked magnetic plates **2** are preferred to be staggered with each other.

The instance shown in respective FIGS. 11B and 11C includes the two magnetic plates **2** having the plurality of slits **4** which are parallel to each other.

In the instance shown in FIG. 11 **B,** the two magnetic plates **2** are stacked such that the respective slits **4** of one magnetic plate **2** are perpendicular to the respective slits **4** of another magnetic plate **2**. In this instance, the magnetic flux **M** is prevented from leaking with the exception of a portion where the slits **4** of one magnetic plate **2** overlap the slits **4** of another magnetic plate **2.** Therefore, it is possible to reduce the magnetic flux leakage by comparison with the instance shown in FIG. 11A.

By contrast, in the instance shown in FIG, 11C, the two magnetic plates **2** are stacked such that the respective slits **4** of one magnetic plate **2** are parallel to the respective slits 4 of another magnetic plate **2.** However, the slits **4** of one magnetic plate **2** are kept from overlapping the slits **4** of another magnetic plate **2.** In this instance, the magnetic flux **M** is prevented from leaving. Therefore, it is possible to reduce the magnetic flux leakage by comparison with the instance shown in FIG. 11B.

## Claims

1. A power reception coil unit for a contactless power transmission apparatus configured to transmit an electric power in a noncontact manner by use of electromagnetic induction, said power reception coil unit comprising:
a power reception coil configured to be magnetically coupled to a power supply coil during a power transmission; and
a magnetic plate made of a magnetic material having electrical conductivity,
wherein
said power reception coil is a planar coil,
said magnetic plate having its surface opposed to said power reception coil and being parallel to said power reception coil, and
said magnetic plate being provided with a gap in at least said surface.

2. A power reception coil unit as set forth in claim 1, wherein
said gap is a slit.

3. A power reception coil unit as set forth in claim 1, wherein
said gap is a groove.

4. A power reception coil unit as set forth in claim 1, wherein
said gap extends along a magnetic flux which passes through said magnetic plate during the power transmission.

5. A power reception coil unit as set forth in claim 1, wherein
said magnetic plate is provided with a plurality of said gaps which are arranged such that density of said gaps of one portion of said magnetic plate having relatively high density of a magnetic flux passing through said magnetic plate during the power transmission is higher than density of said gaps of another portion of said magnetic plate having relatively low density of the magnetic flux passing through said magnetic plate during the power transmission.

## Amended claims

### Amended claims under Art. 19.1 PCT

**1.** (Currently amended) A power reception coil unit for a contactless power transmission apparatus configured to transmit an electric power in a noncontact manner by use of electromagnetic induction, said power reception coil unit comprising:
a power reception coil configured to be magnetically coupled to a power supply coil during a power transmission; and
a magnetic plate made of a magnetic material having electrical conductivity,
wherein
said power reception coil is a planar coil,
said magnetic plate having its surface opposed to said power reception coil and being parallel to said power reception coil, and
said magnetic plate being provided with a gap in at least said surface, and
wherein
said gap extends along a magnetic flux which passes through said magnetic plate during the power transmission.

**2.** (Original) A power reception coil unit as set forth in claim 1, wherein
said gap is a slit.

**3.** (Original) A power reception coil unit as set forth in claim 1, wherein
said gap is a groove.

**4.** (Canceled)

**5.** (Original) A power reception coil unit as set forth in claim 1, wherein
said magnetic plate is provided with a plurality of said gaps which are arranged such that density of said gaps of one portion of said magnetic plate having relatively high density of a magnetic flux passing through said magnetic plate during the power transmission is higher than density of said gaps of another portion of said magnetic plate having relatively low density of the magnetic flux passing through said magnetic plate during the power transmission.
